# EUROPÄISCHE PATENTSCHRIFT

(11) **EP 2 888 123 B1**
(45) Veröffentlichungstag und Bekanntmachung des Hinweises auf die Patenterteilung: **25.10.2017**
(21) Anmeldenummer: 13752879.0
(22) Anmeldetag: 13.08.2013
(51) Int. Cl.: B60K 6/365, B60K 6/48, B60K 6/547, F16H 3/093

(54) **HYBRIDANTRIEBSSTRANG FÜR EIN KRAFTFAHRZEUG, HYBRIDFAHRZEUG UND DESSEN VERWENDUNG**
HYBRID POWERTRAIN FOR A MOTOR VEHICLE, HYBRID VEHICLE, AND USE THEREOF
CHAÎNE CINÉMATIQUE HYBRIDE POUR VÉHICULE AUTOMOBILE, VÉHICULE HYBRIDE ET SON UTILISATION

(30) Priorität: 25.08.2012 DE 102012016988
(43) Veröffentlichungstag der Anmeldung: 01.07.2015
(73) Patentinhaber: Volkswagen Aktiengesellschaft, 38440 Wolfsburg (DE)
(72) Erfinder: LÜHRS, Georg-Friedrich, 34128 Kassel (DE); ZEISE, Dirk, 34127 Kassel (DE)
(86) Internationale Anmeldenummer: PCT/EP2013/066877
(87) Internationale Veröffentlichungsnummer: WO 2014/032961

(56) Entgegenhaltungen:
- DE-A1-102010 046 766
- DE-A1-102010 062 337
- US-A1- 2010 173 746
- US-A1- 2012 115 677

## Beschreibung

### Gebiet der Erfindung

Hybridantriebsstrang für ein Kraftfahrzeug mit einer Verbrennungskraftmaschine und einer mit einer Leistungselektronik und einem elektrischen Energiespeicher verbundenen, einen Stator und einen Rotor aufweisenden, elektrischen Maschine, die drehmomentübertragend mit einer Abtriebswelle verbindbar sind, wobei
- die Verbrennungskraftmaschine mit einer ein oder mehrere Antriebswellenritzel tragenden Verbrennungsmotor-Antriebswelle gekoppelt ist,
- der Rotor der elektrischen Maschine über einen Planetensatz, umfassend ein Sonnenrad, einen Steg und Hohlrad, von denen ein Element als Eingangselement und ein anderes Element als Ausgangselement des Planetensatzes wirkt, mit einer ein oder mehrere Antriebswellenritzel tragenden, koaxial zur Verbrennungsmotor-Antriebswelle angeordneten Elektromaschinen-Antriebswelle gekoppelt ist,
- wenigstens ein Antriebswellenritzel der Verbrennungsmotor-Antriebswelle mit einem korrespondierenden Sammelwellenritzel einer drehmomentübertragend mit der Abtriebswelle gekoppelten ersten Sammelwelle eine schaltbar drehmomentübertragende Ritzelpaarung bildet und
- wenigstens ein Antriebswellenritzel der Elektromaschinen-Antriebswelle mit einem korrespondierenden Sammelwellenritzel einer drehmomentübertragend mit der Abtriebswelle gekoppelten Sammelwelle eine drehmomentübertragende Ritzelpaarung bildet.

Die Erfindung bezieht sich weiter auf ein Kraftfahrzeug mit einem derartigen Hybridantriebsstrang sowie auf eine neuartige Verwendung desselben.

### Stand der Technik

Gattungsgemäße Antriebsstränge sind bekannt aus der DE 10 2010 046 766 A1.

Hybridfahrzeuge mit zwei Antriebsaggregaten, nämlich einer Verbrennungskraftmaschine und einer elektrischen Maschine, die sowohl im motorischen als auch im generatorischen Betrieb betreibbar ist, sind seit langem bekannt. Insbesondere ist das Prinzip des Parallelhybriden bekannt, bei dem sowohl die Verbrennungskraftmaschine als auch die elektrische Maschine in Drehmoment übertragender Weise mit der Abtriebswelle verbindbar sind. Die Verbindung kann dabei selektiv erfolgen, was zu einem rein elektrischen oder einem rein verbrennungsmotorischen Fahrbetrieb führt, oder kombiniert, wobei sowohl die elektrische Maschine als auch die Verbrennungskraftmaschine gleichzeitig mit der Abtriebswelle verbunden sind. Innerhalb des kombinierten Betriebs sind der Boostbetrieb und der Rekuperationsbetrieb bekannt. Im Boostbetrieb liefern beide Antriebsaggregate positives Drehmoment an die Abtriebswelle; im Rekuperationsbetrieb arbeitet die elektrische Maschine im generatorischen Betrieb und nimmt von der Abtriebswelle kinetische Energie ab, um sie in elektrische Energie umzuwandeln. Dies kann beispielsweise im Fall des Abbremsens des Kraftfahrzeugs erfolgen. Alternativ kann auch eine von der Verbrennungskraftmaschine bei deren Betrieb im optimalen Betriebspunkt geleistete, in der aktuellen Fahrsituation jedoch an den Antriebsrädern nicht verlangte Überschussleistung auf diese Weise rekuperiert werden.

Bei den meisten bekannten Konzepten des Parallelhybrids erfolgt die Ankopplung der beiden Antriebsaggregate über mehr oder weniger komplexe leitstungsverzweigte Getriebeanordnungen. Beispielhaft seien hier die DE 100 21 025 A1 sowie die WO 2008/046185 A1 angegeben. Leistungsverzweigte Getriebe umfassen stets wenigstens zwei elektrische Maschinen und eine Mehrzahl von Planetensätzen, deren einzelne Elemente über schaltbare Kupplungen miteinander oder über Bremsen mit einem Getriebegehäuse verbindbar sind. Auf diese Weise lassen sich die oben skizzierten Betriebsmodi und in diesen ggf. unterschiedliche Fahrstufen realisieren, wobei die Einstellung einer angemessenen Übersetzung in einem nachgeschalteten Schaltgetriebe oder durch entsprechend komplexen Aufbau des leistungsverzweigten Getriebes stufenlos in diesem erfolgen kann. Im Fall des nachgeschaltenten Schaltgetriebes wird häufig auf Konzepte rein verbrennungsmotorischer Antriebsstränge zurückgegriffen, wie insbesondere auf das Doppelkupplungsgetriebe, welches eine zugkraftunterbrechungsfreie Schaltung ermöglicht. In der oben genannten DE 100 21 025 A1 wird anstelle eines Doppelkupplungsgetriebes zur Sicherstellung der Zugkraftunterbrechungsfreiheit die zweite elektrische Maschine verwendet.

Die vorgenannte, gattungsbildende DE 10 2010 046 766 A1 offenbart einen Hybridantriebsstrang mit einer Verbrennungskraftmaschine und einer elektrischen Maschine, die koaxial zueinander und einander axial benachbart angeordnet sind. Jedes dieser Antriebsaggregate ist mittelbar mit einer ihm zugeordneten Antriebswelle gekoppelt, wobei die Antriebswelle der Verbrennungskraftmaschine diejenige der elektrischen Maschine koaxial durchsetzt. Jede der Antriebswellen weist mehrere Antriebswellenritzel auf, die mit jeweils einem zugeordneten Sammelwellenritzel einer als parallele Vorgelegewelle angeordneten Sammelwelle kämmen. Die so gebildeten Ritzelpaarungen sind jeweils schaltbar ausgestaltet, indem jeweils ein Ritzel jeder Paarung als Festrad und das andere Ritzel jeder Paarung als Losrad auf der zugeordneten Welle angeordnet ist, wobei das jeweilige Losrad mittels einer schaltbaren Kupplung drehfest mit seiner zugeordneten Welle verbindbar ist. Durch geeignete Ansteuerung der Kupplungen und der Antriebsaggregate lassen sich deren Momente mit unterschiedlichen Übersetzungsverhältnissen, die jeweils durch die ausgewählte Ritzelpaarung vorgegeben sind, auf die Sammelwelle übertragen. Deren Ausgangsritzel kämmt mit dem Eingangsritzel einer Abtriebswelle, die den nachfolgenden Abtriebsstrang antreibt und beispielsweise mit einem nachgeordneten Differential verbunden sein kann. Während die Kopplung zwischen der Verbrennungskraftmaschine und ihrer zugeordneten Antriebswelle abgesehen von einer schaltbaren Kupplung weitgehend direkt ist, ist die Antriebswelle der elektrischen Maschine indirekt über einen Planetensatz mit dieser gekoppelt. Insbesondere ist der Rotor der elektrischen Maschine drehfest mit dem Sonnenrad des Planetensatzes verbunden, während der Steg des Planetensatzes drehfest mit der Elektromaschinen-Antriebswelle verbunden ist. Außerdem ist das Hohlrad des Planetensatzes mit der Verbrennungsmotor-Antriebswelle verbunden, sodass beide Antriebswege nicht unabhängig voneinander sind. Neben dieser fehlenden Unabhängigkeit ist auch der erhebliche axiale Bauraum der bekannten Vorrichtung nachteilig; dieser rührt im Wesentlichen von dem axialen Platzbedarf der vielen, axial nebeneinander angeordneten Antriebswellenritzel her. Deren Anzahl ist durch die erwünschte Anzahl schaltbarer Gänge des bekannten Antriebsstrangs vorgegeben.

Aus der US 2012/0115677 A1 ist ein ähnlicher Hybrid-Antriebsstrang bekannt, dessen Verbrennungsmotor-Antriebswelle allerdings über eine feste Ritzelpaarung mit der ersten Sammelwelle verbunden ist. Diese ist mit der die Elektromaschinen-Antriebswelle über eine Kaskade von mehreren schaltbaren Ritzelpaarungen verbunden ist. Die erste Sammelwelle ist nicht direkt mit dem Abtrieb des Kraftfahrzeugs verbunden; vielmehr ist sie über schaltbare Zahnradpaarungen, die bereits Bestandteil der vorgenannten Kaskaden waren, mit einer zweiten Sammelwelle verbunden, die ihrerseits ein Abtriebsritzel trägt. Weiter ist zur Realisierung eines Rückwärtsgangs eine dritte Sammelwelle vorgesehen, die über eine feste Ritzelpaarung mit der Verbrennungsmotor-Antriebswelle und über eine schaltbare Ritzelpaarung auch mit der Elektromaschinen-Antriebswelle verbunden ist. Über eine Hauptkupplung ist alternativ die Verbrennungsmotor-Antriebswelle oder die Elektromaschinen-Antriebswelle oder keine von beiden direkt mit der Verbrennungskraftmaschine verbindbar. Die Rotorwelle ist über einen schaltbaren Planetensatz mit der Elektromaschinen-Antriebswelle gekoppelt, wobei wahlweise entweder die Sonne oder das Hohlrad mit der Rotorwelle verbunden oder die Rotorwelle vollständig von der Elektromaschinen-Antriebswelle getrennt werden kann.

### Aufgabenstellung

Es ist die Aufgabe der vorliegenden Erfindung einen gattungsgemäßen Antriebsstrang derart weiterzubilden, dass der axiale Bauraum ohne Verlust schaltbarer Gänge reduziert wird.

### Darlegung der Erfindung

Diese Aufgabe wird in Verbindung mit den Merkmalen des Oberbegriffs von Anspruch 1 dadurch gelöst, dass der Rotor der elektrischen Maschine mittels einer schaltbaren Kupplung wahlweise entweder mit dem Sonnenrad oder dem Steg des Planetensatzes, dessen Hohlrad gehäusefest angeordnet ist, verbindbar ist. Diese schaltbare Kupplung soll im Folgenden als Planetensatz-Kupplung bezeichnet werden.

Bevorzugte Ausführungsformen der Erfindung sind Gegenstand der abhängigen Ansprüche.

Zentrales Merkmal der Erfindung ist die Schaltbarkeit der indirekten Kopplung zwischen der elektrischen Maschine und der ihr zugeordneten Antriebswelle über den Planetensatz. Im Fall, dass die elektrische Maschine mittels der Planetensatz-Kupplung gleich mit dem Ausgangselement des Planetensatzes verbunden wird, wird eine im Wesentlichen direkte Verbindung zwischen elektrischer Maschine und ihrer Antriebswelle realisiert. In der anderen Stellung der Planetensatz-Kupplung, in der die elektrische Maschine mit dem Eingangselement des Planetensatzes verbunden ist, erfolgt diese Verbindung indirekt, nämlich über die Übersetzungsmechanik des Planetensatzes, in dem der Momentenfluss vom Eingangselement zu dem mit der Elektromaschinen-Antriebswelle verbundenen Ausgangselement verläuft. Entsprechend ist hier eine Übersetzung realisiert. Daher können pro Antriebswellenritzel der Elektromaschinen-Antriebswelle zwei unterschiedliche Gänge realisiert werden, was den axialen Bauraum gegenüber bekannten Vorrichtungen, die nur einen Gang pro Antriebswellenritzel vorsehen, im Wesentlichen halbiert.

Die Erfindung ist in zwei grundlegenden Varianten realisierbar, die sich durch den Weg der Momentenübertragung von der Elektromaschinen-Antriebswelle zur Abtriebswelle unterscheiden. Während dies bei der ersten Erfindungsvariante wie auch beim gattungsbildenden Stand der Technik über dieselbe Sammelwelle erfolgt, über die auch Moment von der Verbrennungskraftmaschine zur Abtriebswelle geleitet werden kann und die hier als erste Sammelwelle bezeichnet wird, erfolgt der Fluss des Elektromaschinenmomentes bei der zweiten Variante über eine eigene Sammelwelle, die hier als zweite Sammelwelle bezeichnet wird und die hier im strengen Sinn keine Momente unterschiedlicher Aggregate "sammelt", sondern als reine Zwischenwelle wirkt.

Die in Anspruch 2 dargelegte erste Erfindungsvariante lässt sich daher so definieren, dass diejenige Sammelwelle, mit deren Sammelwellenritzel das Antriebswellenritzel der Elektromaschinen-Antriebswelle eine drehmomentübertragende Ritzelpaarung bildet, die erste Sammelwelle ist. Die in Anspruch 3 dargelegte zweite Erfindungsvariante lässt sich hingegen so definieren, dass diejenige Sammelwelle, mit deren Sammelwellenritzel das Antriebswellenritzel der Elektromaschinen-Antriebswelle eine drehmomentübertragende Ritzelpaarung bildet, eine zweite Sammelwelle ist, deren Sammelwellenritzel keine Ritzelpaarung mit Antriebswellenritzeln der Verbrennungsmotor-Antriebswelle bilden.

Bei einer Weiterbildung der Erfindung ist vorgesehen, dass wenigstens ein Antriebswellenritzel der Verbrennungsmotor-Antriebswelle mit einem korrespondieren Sammelwellenritzel einer drehmomentübertragend mit der Abtriebswelle gekoppelten dritten Sammelwelle eine schaltbar drehmomentübertragende Ritzelpaarung bildet. Auf Seiten der Verbrennungsmotor-Antriebswelle sind an diesen Ritzelpaarungen bevorzugt dieselben Ritzel beteiligt, die auch an den Ritzelpaarungen mit der ersten Sammelwelle beteiligt sind. Dies bedeutet, dass zumindest für die Verbrennungskraftmaschine das Konzept der Sammelwelle ein weiteres Mal realisiert ist. Hierdurch wird weiterer axialer Bauraum eingespart, da jedes Antriebswellenritzel der Verbrennungsmotor-Antriebswelle sowohl mit einem Sammelwellenritzel der ersten Sammelwelle als auch mit einem Sammelwellenritzel der dritten Sammelwelle je eine drehmomentübertragende Ritzelpaarung mit einzigartiger Übersetzung bildet. So können pro Antriebswellenritzel der Verbrennungsmotor-Antriebswelle zwei Gänge realisiert werden, was erneut eine erhebliche axiale Bauraumeinsparung bedeutet. Auch hier muss es sich nicht um eine Welle handeln, die im strengen Wortsinn Momente mehrerer Aggregate "sammelt". Eine nur mit einem Aggregat interagierende Zwischenwelle genügt.

Diese Ausgestaltung, die zu einer auch radial extrem kompakten Bauform führt, lässt sich insbesondere dann realisieren, wenn, wie bevorzugt vorgesehen, die Abtriebswelle sowohl zu den Antriebswellen von Verbrennungskraftmaschine und elektrischer Maschine als auch zu jeder Sammelwelle parallel und radial beabstandet angeordnet ist. Lediglich die Elektromaschinen-Antriebswelle und die Verbrennungsmotor-Antriebswelle sind koaxial zueinander angeordnet, wobei sie bevorzugt einander durchgreifend angeordnet sind. Erfindungsgemäß wirkt das Sonnenrad des Planetensatzes als dessen Eingangselement und sein Steg als mit der Elektromaschinen-Antriebswelle verbundenes Ausgangselement. Die Planetensatz-Kupplung ist eingerichtet, den Rotor der elektrischen Maschine wahlweise entweder mit dem Sonnenrad oder dem Steg zu verbinden. Da der Steg, wie oben erläutert, als Ausgangselement des Planetensatzes mit der Elektromaschinen-Antriebswelle verbunden ist, bedeutet die erstgenannte Schaltstellung, dass der Planetensatz als einfache Übersetzungsstufe wirkt, während in der letztgenannten Schaltstellung ein direkter Momentenfluss zwischen Rotor und Elektromaschinen-Antriebswelle zustandekommt.

Günstigerweise sind die schaltbaren Ritzelpaarungen jeweils durch zwei miteinander kämmende Ritzel gebildet, von denen wenigstens eines mittels einer schaltbaren Formschlusskupplung mit seiner zugeordneten Welle gekoppelt ist. Die schaltbaren Formschlusskupplungen sind dabei bevorzugt als Synchronisierungen oder als Klauenkupplungen ausgebildet. Während die Variante mit reinen Klauenkupplungen einen besseren Wirkungsgrad zeitigt, aber im Hinblick auf die Synchronisation der Drehzahlen der beteiligten Wellen eine komplexere Steuerung erfordert, ist die Variante mit Synchronisierungen steuerungstechnisch leichter zu realisieren, was jedoch aufgrund der Reibungsverluste der Synchronringe der Synchronisierungen mit einem geringen Wirkungsgradverlust verbunden ist.

Bei einer Weiterbildung der Erfindung ist vorgesehen, dass der Rotor der elektrischen Maschine und die Verbrennungsmotor-Antriebswelle mittels einer schaltbaren Hauptwellenkupplung miteinander verbindbar sind. Der Fachmann wird erkennen, dass die beiden Antriebsaggregate im Rahmen der oben erläuterten Ausgestaltungen völlig unabhängig voneinander arbeiten können. Durch die letztgenannte Weiterbildung der Erfindung wird zusätzlich eine direkte Wechselwirkung zwischen beiden Aggregaten möglich, sodass auch Gänge, d.h. Übersetzungen, die primär zur Verwendung mit dem einen Aggregat vorgesehen sind, alternativ auch durch das anderen Aggregat angetrieben werden können. Außerdem lassen sich auf die Weise kombinierte Betriebsmodi realisieren, sodass sämtliche bekannten Hybrid-Betriebsmodi darstellbar sind. Dies betrifft beispielsweise das Boosten, wie auch das Rekuperieren.

Einen besonderen Fall der Rekuperation stellt die Verwendung eines Hybridfahrzeugs mit einem erfindungsgemäßen Antriebsstrang als Standgenerator dar. Häufig ist der Betrieb mobiler elektrischer Geräte abseits von Stromnetzen gewünscht. Als Beispiel seien forstwirtschaftliche Geräte, wie elektrische Kettensägen o.ä. in Waldgebieten genannt. Verfügt das erfindungsgemäße Hybridfahrzeug über eine mit der Leistungselektronik und dem elektrischen Energiespeicher verbundene elektrische Anschlussstelle, z.B. eine Steckdose, kann das Kraftfahrzeug selbst als elektrischer Standgenerator verwendet werden, wobei der Rotor der elektrischen Maschine und die Verbrennungsmotor-Antriebswelle mittels der Hauptwellenkupplung drehfest miteinander verbunden werden, ein elektrischer Verbraucher an die Anschlussschnittstelle angeschlossen wird und die elektrische Maschine im Generatorbetrieb betrieben wird, während die Verbrennungskraftmaschine über die Leistungselektronik zu einem Betrieb bei Drehzahlen gemäß der aktuellen Leistungsaufnahme des elektrischen Verbrauchers angesteuert wird.

Weitere Merkmale und Vorteile der Erfindung ergeben sich aus der nachfolgenden speziellen Beschreibung und den Zeichnungen.

### Kurze Beschreibung der Zeichnungen

Es zeigen:
- Figur 1: eine schematische Querschnittsdarstellung der Wellenanordnung einer Ausführungsform einer ersten Erfindungsvariante,
- Figur 2: eine schematische Querschnittsdarstellung der Wellenanordnung einer Ausführungsform einer zweiten Erfindungsvariante,
- Figur 3: eine schematische Übersichtsskizze einer Ausführungsform der ersten Erfindungsvariante,
- Figur 4: die Darstellung von Figur 3 mit eingezeichnetem Momentenverlauf einer ersten Schaltstellung,
- Figur 5: die Darstellung von Figur 3 mit eingezeichnetem Momentenverlauf einer zweiten Schaltstellung,
- Figur 6: die Darstellung von Figur 3 mit eingezeichnetem Momentenverlauf einer dritten Schaltstellung,
- Figur 7: die Darstellung von Figur 3 mit eingezeichnetem Momentenverlauf einer vierten Schaltstellung,
- Figur 8: die Darstellung von Figur 3 mit eingezeichnetem Momentenverlauf einer fünften Schaltstellung,
- Figur 9: eine schematische Übersichtsskizze einer Ausführungsform der zweiten Erfindungsvariante.

### Ausführliche Beschreibung bevorzugter Ausführungsformen

Gleiche Bezugszeichen in den Figuren deuten auf gleiche oder analoge Elemente hin.

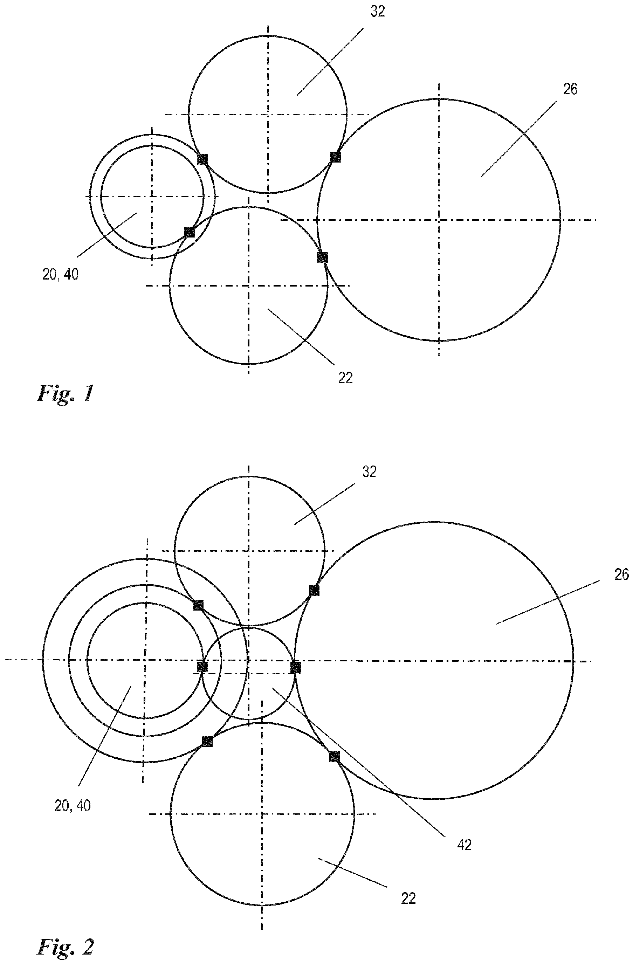

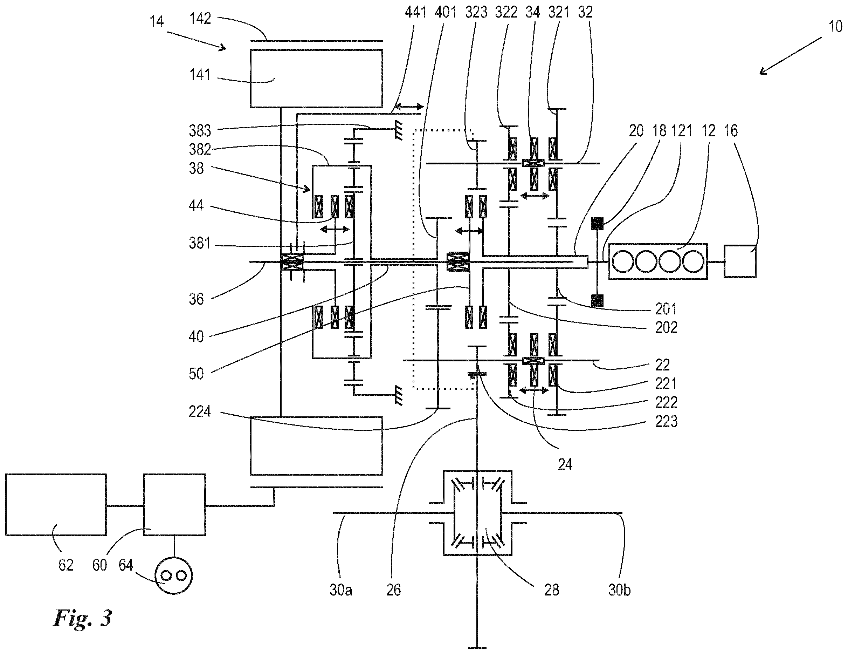

Figur 1 zeigt eine schematische Querschnittsdarstellung einer Ausführungsform der ersten Erfindungsvariante deren Topologie in der Übersichtskizze von Figur 3 verdeutlicht ist. Diese beiden Figuren sollen nachfolgend gemeinsam diskutiert werden. Die gezeigte Anordnung soll im Folgenden kurz als 3-Wellen-Anordnung bezeichnet werden. Ein Antriebsstrang 10 weist zwei Antriebsaggregate auf, nämlich eine Verbrennungskraftmaschine 12 und eine elektrische Maschine 14, umfassend einen innenliegenden Rotor 141 und einen außenliegenden Stator 142. Bei der dargestellten Ausführungsform ist die Verbrennungskraftmaschine 12 mit einer Start/Stopp-Einheit 16 verbunden, die für die vorliegende Erfindung jedoch keine zentrale Bedeutung hat. Die Kurbelwelle 121 der Verbrennungskraftmaschine 12 ist über ein Zwei-Massen-Schwungrad 18 mit einer bei der gezeigten Ausführungsform als Hohlwelle ausgebildeten Verbrennungsmotor-Antriebswelle 20 gekoppelt. Die Verbrennungsmotor-Antriebswelle trägt zwei Antriebswellenritzel 201, 202, die bei der gezeigten Ausführungsform als Festräder axial fest und drehfest auf der Verbrennungsmotor-Antriebswelle 20 angeordnet sind. Jedes der Antriebswellenritzel 201, 202 bildet mit einem jeweils korrespondierenden Sammelwellenritzel 221, 222, welches als Losrad auf einer ersten Sammelwelle 22 angeordnet ist, eine schaltbare Ritzelpaarung. Hierzu ist die erste Sammelwelle 22 mit einer ersten Sammelwellenkupplung 24 versehen, welche je nach Schaltstellung das Losrad 221, das Losrad 222 oder keines der beiden Losräder 221, 222 drehfest mit der ersten Sammelwelle 22 koppelt. Der Fachmann wird erkennen, dass je nach Schaltstellung der ersten Sammelwellenkupplung 24 ein Moment von der Verbrennungskraftmaschine 12 mit durch die konkrete Ritzelpaarung vorgegebenen Übersetzung auf die Sammelwelle 22 übertragen werden kann. Ein Ausgangsritzel 223 der ersten Sammelwelle 22 kämmt mit einem Eingangsritzel einer Abtriebswelle 26, die bei der gezeigten Ausführungsform mit dem Differentialkorb eines Querdifferentials 28 verbunden ist. Über dessen Achsflanschwellen 30a, 30b wird das Moment auf nicht dargestellte Antriebsräder eines Kraftfahrzeugs übertragen.

Weiter bildet jedes Antriebswellenritzel 201, 202 der Verbrennungsmotor-Antriebswelle 20 mit je einem korrespondierenden Sammelwellenritzel 321, 322 einer weiteren Sammelwelle, die hier als dritte Sammelwelle 32 bezeichnet wird, eine schaltbare Ritzelpaarung. Die Sammelwellenritzel 321, 322 sind in der gezeigten Ausführungsform als Losräder ausgebildet. Die dritte Sammelwelle 32 weist eine dritte Sammelwellenkupplung 34 auf, welche je nach Schaltstellung entweder das eine Losrad 321, das andere Losrad 322 oder keines von beiden drehfest mit der dritten Sammelwelle 32 koppelt. Die dritte Sammelwelle 32 weist zudem ein Ausgangsritzel 323 auf, welches wie auch das Ausgangsritzel 223 der zweiten Sammelwelle 22 mit dem Eingangsritzel der Abtriebswelle 26 kämmt. Diese Verbindung ist in der Darstellung von Figur 3 als punktierte Pfeillinie dargestellt. Der Fachmann wird erkennen, dass je nach Schaltstellung der dritten Sammelwellenkupplung 32 ein Moment der Verbrennungskraftmaschine 12 mit durch die jeweils geschaltete Ritzelpaarung vorgegebener Übersetzung über die dritte Sammelwelle 32 auf die Abtriebswelle 26 übertragen werden kann. Natürlich haben die Schaltungen der beiden Sammelwellenkupplungen 24 und 34 dabei so aufeinander abgestimmt zu sein, dass der Momentenfluss jeweils nur über eine der beiden Sammelwellen 22 oder 32 verläuft.

Die räumliche Anordnung der Wellen ist in Figur 1 besser erkennbar. Dort sind mögliche Momentenübertragungspunkte als schwarze Quadrate dargestellt, obgleich nur die Wellen als solche und nicht spezielle Ritzel mit Bezugszeichen versehen sind. Der Fachmann wird jedoch der Zusammenschau der Figuren 1 und 3 eine klare Vorstellung von der räumlichen Struktur des erfindungsgemäßen Antriebsstrangs entnehmen können.

Das Moment der elektrischen Maschine 14 wird zunächst von deren Rotor 141 an die Rotorwelle 36 abgegeben. Diese verläuft koaxial zu der Verbrennungsmotor-Antriebswelle 20. Allerdings stellt die Rotorwelle 36 nicht etwa das Pendant zur Verbrennungsmotor-Antriebswelle 20 dar. Hierzu ist die Elektromaschinen-Antriebswelle 40 vorgesehen, die als Hohlwelle koaxial zur Rotorwelle 36 angeordnet ist und von dieser durchsetzt wird. Die Elektromaschinen-Antriebswelle 40 trägt ein Antriebsritzel 401, welches mit einem weiteren Sammelwellenritzel 224 der ersten Sammelwelle 22 kämmt. Gem. der im allgemeinen Beschreibungsteil sowie in den Ansprüchen gewählten Terminologie müsste an dieser Stelle von einer "zweiten" Sammelwelle gesprochen werden, die der in Figur 3 gezeigten Ausführungsform jedoch mit der ersten Sammelwelle identisch ist. Diese erfüllt somit gleichzeitig die Funktion der Vermittlung von Verbrennungskraftmaschinen-Moment (erste Sammelwelle) und von Elektromaschinen-Moment (zweite Sammelwelle) an die Abtriebswelle 26 und wirkt somit als "echte" Sammelwelle.

Um das Moment der elektrischen Maschine 14 von deren Rotorwelle 36 an die Elektromaschinen-Antriebswelle 40 zu übertragen, ist ein Planetensatz 38 vorgesehen, umfassend ein Sonnenrad 381, einen Steg 382 und ein gehäusefestes Hohlrad 383. Die Elektromaschinen-Antriebswelle 40 ist drehfest mit dem Steg 382 verbunden, der daher als Ausgangselement des Planetensatzes 38 wirkt. Die Verbindung der Rotorwelle 36 mit dem Planetensatz 38 wird über die Planetensatz-Kupplung 44 vermittelt, die je nach Schaltstellung die Rotorwelle 36 mit dem als Eingangselement des Planetensatzes 38 dienenden Sonnenrad 381, mit dem Steg 382 oder mit keinem dieser Elemente momentenübertragend verbindet. Je nach Schaltstellung der Planetensatz-Kupplung 44 wird das Moment der elektrischen Maschine daher mit anderer Übersetzung an das Antriebswellenritzel 401 und über dieses an die erste Sammelwelle 22 und die Abtriebswelle 26 geleitet. Die zur Betätigung der Planetensatz-Kupplung 44 dienende Betätigungsmimik ist in Figur 3 mit dem Bezugszeichen 441 angedeutet.

Weiter ist in Figur 3 noch eine Hauptwellenkupplung 50 erkennbar, die je nach Schaltstellung die Rotorwelle 36 und die Verbrennungsmotor-Antriebswelle 20, die koaxial und einander bereichsweise durchsetzend angeordnet sind, schaltbar miteinander koppelt. Im verbundenen Zustand kann dabei beispielsweise Moment von der elektrischen Maschine zum Zweck des Anlassens direkt an die Verbrennungskraftmaschine 12 geleitet werden. Umgekehrt kann zum generatorischen Betrieb der elektrischen Maschine 14 Moment von der Verbrennungskraftmaschine 12 an die elektrische Maschine 14 geleitet werden. Auch können typische Hybrid-Betriebsmodi, wie Boosten oder Rekuperieren auf diese Weise realisiert werden.

Schließlich sind in Figur 3 noch eine Leistungselektronik 60 und eine Batterie 62 als elektrischer Energiespeicher skizziert. Diese sind mit einer elektrischen Schnittstelle 64 verbunden, an die sich externe elektrische Geräte anschließen lassen.

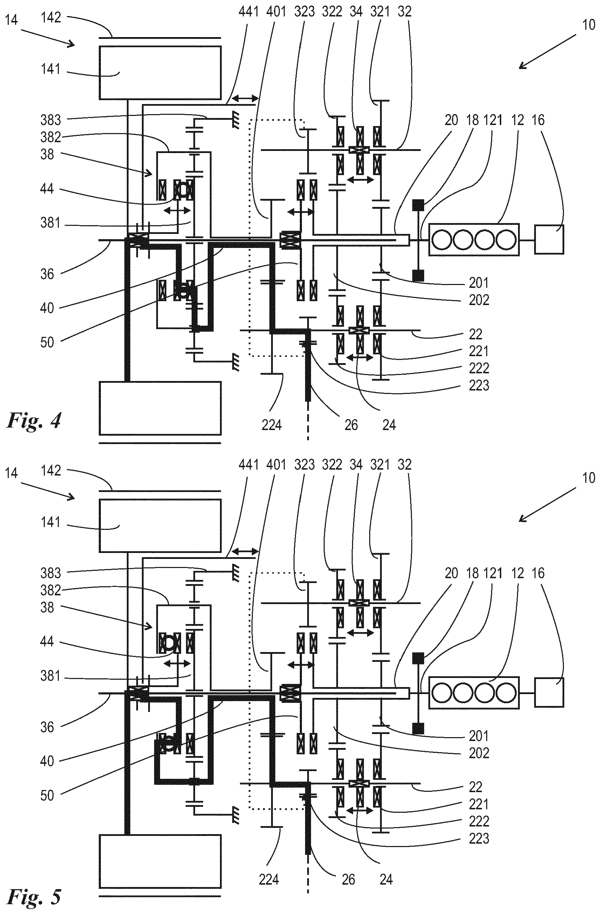

Die Figuren 4 bis 8 zeigen den Momentenfluss in einem Antriebsstrang gem. Figur 3 in ausgewählten Schaltstellungen der oben erläuterten schaltbaren Elemente. In Figur 4 ist ein kleiner elektrischer Gang realisiert. Hierzu ist die Planetensatzkupplung so geschaltet, dass die Rotorwelle 36 mit dem Sonnenrad 381 des Planetensatzes 38 verbunden ist. Der Planetensatz 38 wirkt dann als Übersetzungsstufe, sodass das Moment über seinen Steg 382
an die Elektromaschinen-Antriebswelle 40 geleitet wird. Über deren Antriebswellenritzel 401 fließt das Moment auf die erste Sammelwelle 22 und von dieser zum Abtrieb 26. Die übrigen Kupplungen 24, 34 und 50 befinden sich dabei in einer nicht-momentenübertragenden Schaltstellung.

Figur 5 zeigt die Realisierung eines größeren elektrischen Gangs. Im Unterschied zur Schaltstellung von Figur 4 verbindet die Planetensatzkupplung 44 hier die Rotorwelle 36 direkt mit dem Steg 382 des Planetensatzes 38. Das Elektromaschinen-Moment wird somit ohne weitere Übersetzung an die Elektromaschinen-Antriebswelle 40 geleitet. Im Übrigen kann auf das oben zur Figur 4 Gesagte verwiesen werden.

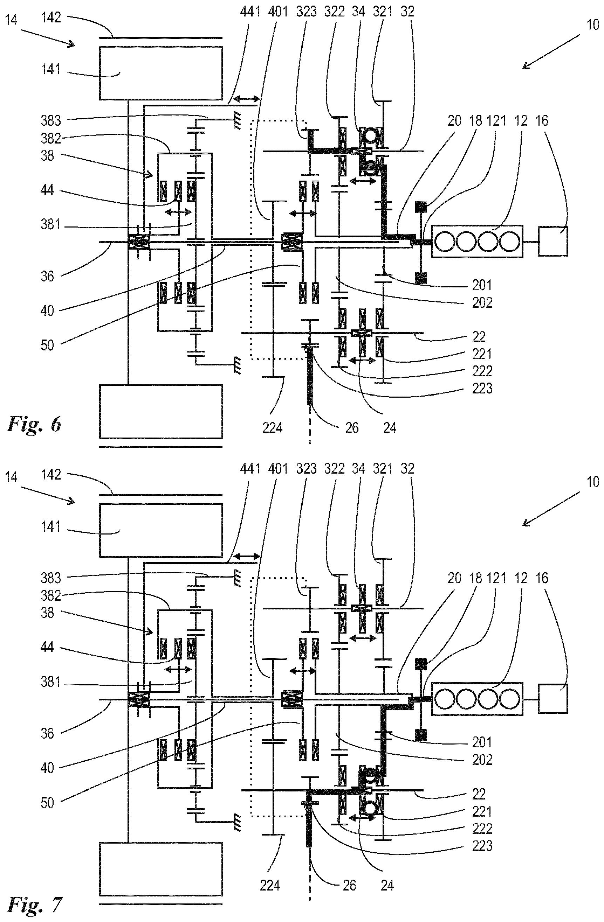

Figur 6 zeigt die Realisierung eines kleinen verbrennungsmotorischen Ganges. Das Moment der Verbrennungskraftmaschine 12, welches direkt die Verbrennungsmotor-Antriebswelle 20 treibt, läuft über die Ritzelpaarung 201/221 auf die dritte Sammelwelle 32. Hierzu ist die dritte Sammelwellenkupplung 34 so geschaltet, dass das Sammelwellenritzel 321 drehfest mit der dritten Sammelwelle 32 verbunden ist. Über das Ausgangsritzel 323 der dritten Sammelwelle 32 läuft das Moment (entlang der punktiert dargestellten Verbindung) zur Ausgangswelle 26.

Außer der dritten Sammelwellenkupplung 34 befinden sich sämtliche weiteren Kupplungen in einem nicht-momentenübertragenden Schaltzustand.

Figur 7 zeigt die Realisierung eines größeren verbrennungsmotorischen Ganges. Hierbei fließt das Moment von der Verbrennungskraftmaschine 12 direkt zur Verbrennungsmotor-Antriebswelle 20 und über die Ritzelverbindung 201/221 zur ersten Sammelwelle 22. Hierzu ist die erste Sammelwellenkupplung 24 so geschaltet, dass das Sammelwellenritzel 221 drehfest mit der ersten Sammelwelle 22 verbunden ist. Über das Ausgangsrad 223 der zweiten Sammelwelle 22 fließt das Moment zum Abtrieb 26. Alle übrigen Kupplungen befinden sich dabei in einem nicht-momentenübertragenden Schaltzustand.

Der Fachmann wird erkennen, dass in analoger Weise zwei weitere Gänge über die Ritzelpaarungen 202/222 und 202/322 realisierbar sind.

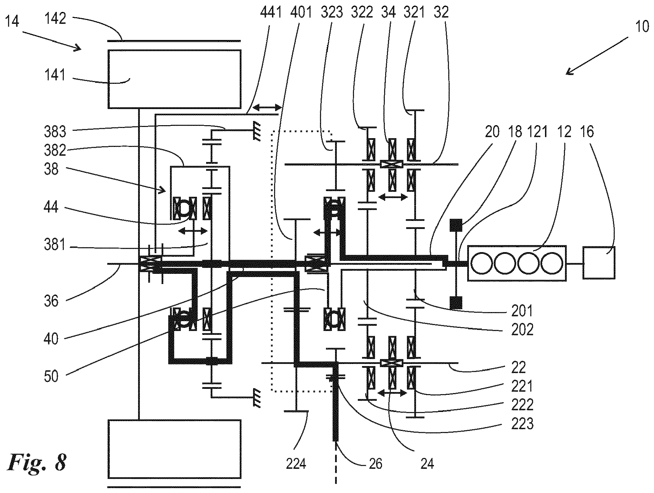

Figur 8 zeigt die Realisierung des gleichen Ganges wie in Figur 5, wobei jedoch das ursprüngliche Moment nicht aus der elektrischen Maschine 14 sondern aus der Verbrennungskraftmaschine 12 stammt. Hierzu wird zusätzlich zu der im Zusammenhang mit Figur 5 beschriebenen Schaltstellung der Planetensatzkupplung 44 die Hauptwellenkupplung 50 zugestellt, sodass das Moment der Verbrennungskraftmaschine 12 von der Verbrennungsmotor-Antriebswelle 20 über die Hauptwellenkupplung 50 zur Rotorwelle 36 und von dort in der im Zusammenhang mit Figur 5 beschriebenen Weise zum Abtrieb 26 fließt. Der Rotor 141 der elektrischen Maschine 14 kann dabei leer mitlaufen oder in synchronisierter Weise elektrisch angetrieben werden, um beispielsweise einen extrem momentenstarken Gang zu realisieren, beispielsweise für eine Bergauffahrt mit Anhänger.

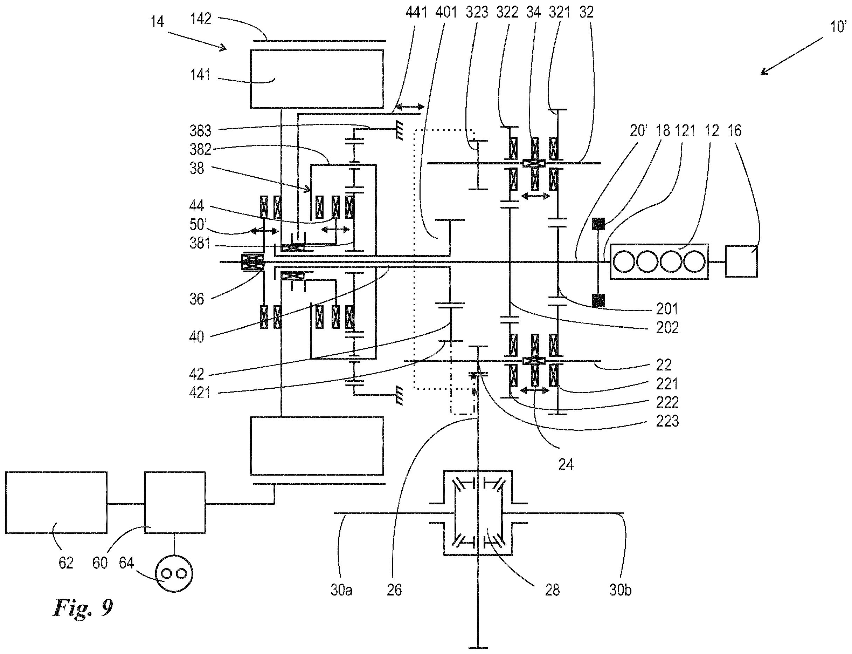

Figur 9, die in Zusammenschau mit Figur 2 zu lesen ist, zeigt die Topologie der zweiten Variante der vorliegenden Erfindung, die hier als 4-Wellen-Anordnung bezeichnet werden soll. In dem modifizierten Antriebsstrang 10' der Figur 9 sind diejenigen Bauteile, die im Wesentlichen identisch zu den Bauteilen gem. Figur 3 sind, mit denselben Bezugszeichen wie in Figur 3 versehen. Modifizierte Elemente tragen in Anlehnung an die analogen Elemente von Figur 3 jeweils die gleichen Bezugszeichen mit einem"'". Der wesentliche Unterschied des Antriebsstrangs 10' im Vergleich zum Antriebsstrang 10 der Figur 3 ist die zweite Sammelwelle 42, die mit ihrem Sammelwellenritzel 421 als Zwischenwelle zwischen dem Antriebswellenritzel 401 der Elektromaschinen-Antriebswelle 40 und dem Eingangsritzel 26 des Abtriebs vermittelt. Die Verbindung zwischen der zweiten Sammelwelle 42 und dem Abtrieb 26 ist in Figur 9 als strichpunktierte Pfeillinie gekennzeichnet. Die räumliche Lage der Wellen ist aus Figur 2 besser ersichtlich.

Eine weitere Modifikation ist in dem "Herausziehen" der Hauptwellenkupplung 50' zu sehen. Die randständige Anordnung hat im Vergleich zu der zentralen Anordnung in Figur 3 den Vorteil der besseren Zugänglichkeit. Hierzu ist die Verbrennungsmotor-Antriebswelle 20' nicht mehr als Hohlwelle ausgebildet, sondern als Kernwelle, die sich über die gesamte Länge des Antriebsstrangs 10' erstreckt und insbesondere die Elektromaschinen-Antriebswelle 40 axial durchsetzt. Im Übrigen wird auf das oben Gesagte direkt bzw. in analoger Weise verwiesen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere stellen die in den Figuren dargestellten Anzahl von Ritzeln und entsprechenden Fahrstufen keine Beschränkung der vorliegenden Erfindung dar. Auch ist die Erfindung nicht auf die in den Figuren gezeigte Front/Quer-Anordnung beschränkt. Für den Fachmann wird es ein Leichtes sein, durch geeignete Umordnung der Elemente und ggf. Hinzufügung von Umlenkelementen Front/Quer-Anordnungen oder Anordnungen mit mehreren angetriebenen Achsen, dies insbesondere durch Verwendung eines Längsdifferentials, zu realisieren. Auch innerhalb der einzelnen Anordnungen kann eine Umordnung der Elemente, beispielsweise der Antriebsaggregate im Verhältnis zueinander und zu dem Kerngetriebe vorgenommen werden.

### Bezugszeichenliste

- 10, 10': Antriebsstrang
- 12: Verbrennungskraftmaschine
- 121: Kurbelwelle von 12
- 14: elektrische Maschine
- 141: Rotor von 14
- 142: Stator von 14
- 16: Start/Stopp-Einheit
- 18: Zwei-Massen-Schwungrad
- 20, 20': Verbrennungsmotor-Antriebswelle
- 201, 202: Antriebswellenritzel von 20, 20'
- 22: erste Sammelwelle
- 221, 222: Sammelwellenritzel von 22
- 223: Ausgangsritzel von 22
- 24: erste Sammelwellenkupplung
- 26: Abtriebswelle
- 28: Differential
- 30a,b: angetriebene Achsschenkel
- 32: dritte Sammelwelle
- 321, 322: Sammelwellenritzel von 32
- 323: Ausgangsritzel von 32
- 34: dritte Sammelwellenkupplung
- 36: Rotorwelle
- 38: Planetensatz
- 381: Sonnenrad
- 382: Steg
- 383: Hohlrad
- 40: Elektromaschinen-Antriebswelle
- 401: Antriebswellenritzel von 40
- 42: zweite Sammelwelle
- 421: Sammelwellenritzel von 42
- 44: Planetensatz-Kupplung
- 50, 50': Hauptwellenkupplung
- 60: Leistungselektronik
- 62: Batterie
- 64: elektrische Schnittstelle

## Patentansprüche

1. Hybridantriebsstrang für ein Kraftfahrzeug mit einer Verbrennungskraftmaschine (12; 12') und einer mit einer Leistungselektronik (60) und einem elektrischen Energiespeicher (62) verbundenen, einen Stator (142) und einen Rotor (141) aufweisenden, elektrischen Maschine (14), die drehmomentübertragend mit einer Abtriebswelle (26) verbindbar sind, wobei
- die Verbrennungskraftmaschine (12, 12') mit einer ein oder mehrere Antriebswellenritzel (201, 202) tragenden Verbrennungsmotor-Antriebswelle (20; 20') gekoppelt ist,
- der Rotor (141) der elektrischen Maschine (14) über einen Planetensatz (38), umfassend ein als Eingangselement wirkendes Sonnenrad (381), einen als Ausgangselement wirkenden Steg (382) und ein Hohlrad (383), mit einer ein oder mehrere Antriebswellenritzel (401) tragenden, koaxial zur Verbrennungsmotor-Antriebswelle (20; 20') angeordneten Elektromaschinen-Antriebswelle (40) gekoppelt ist,
- das wenigstens eine Antriebswellenritzel (201, 202) der Verbrennungsmotor-Antriebswelle (20; 20') mit einem korrespondierenden Sammelwellenritzel (221, 222) einer drehmomentübertragend mit der Abtriebswelle (26) gekoppelten ersten Sammelwelle (22) eine schaltbar drehmomentübertragende Ritzelpaarung bildet und
- das wenigstens eine Antriebswellenritzel (401) der Elektromaschinen-Antriebswelle (40) mit einem korrespondierenden Sammelwellenritzel (224; 421) einer drehmomentübertragend mit der Abtriebswelle (26) gekoppelten Sammelwelle (22; 42) eine drehmomentübertragende Ritzelpaarung bildet,
**dadurch gekennzeichnet, dass**
der Rotor (141) der elektrischen Maschine (14) mittels einer schaltbaren Kupplung (44) wahlweise entweder mit dem Sonnenrad (381) oder dem Steg (382) des Planetensatzes (38), dessen Hohlrad (383) gehäusefest angeordnet ist, verbindbar ist.

2. Antriebsstrang nach Anspruch 1,
**dadurch gekennzeichnet,**
**dass** diejenige Sammelwelle (22), mit deren Sammelwellenritzel (221, 222) das Antriebswellenritzel (401) der Elektromaschinen-Antriebswelle (40) eine drehmomentübertragende Ritzelpaarung bildet, die erste Sammelwelle (22) ist.

3. Antriebsstrang nach Anspruch 1,
**dadurch gekennzeichnet,**
**dass** diejenige Sammelwelle (42), mit deren Sammelwellenritzel (421) das Antriebswellenritzel (401) der Elektromaschinen-Antriebswelle (40) eine drehmomentübertragende Ritzelpaarung bildet, eine zweite Sammelwelle (42) ist, deren Sammelwellenritzel (421) keine Ritzelpaarung mit Antriebswellenritzeln (201, 202) der Verbrennungsmotor-Antriebswelle (20') bilden.

4. Antriebsstrang nach einem der vorangehenden Ansprüche,
**dadurch gekennzeichnet,**
**dass** wenigstens ein Antriebswellenritzel (201, 202) der Verbrennungsmotor-Antriebswelle (20, 20') mit einem korrespondierenden Sammelwellenritzel einer drehmomentübertragend mit der Abtriebswelle (26) gekoppelten dritten Sammelwelle (32) eine schaltbar drehmomentübertragende Ritzelpaarung bildet.

5. Antriebsstrang nach einem der vorangehenden Ansprüche,
**dadurch gekennzeichnet,**
**dass** die Abtriebswelle (26) sowohl zu den Antriebswellen (20; 20', 40) von Verbrennungskraftmaschine (12) und elektrischer Maschine (14) als auch zu jeder Sammelwelle (22, 32, 42) parallel und radial beabstandet angeordnet ist.

6. Antriebsstrang nach einem der vorangehenden Ansprüche,
**dadurch gekennzeichnet,**
**dass** die Elektromaschinen-Antriebswelle (40) und die Verbrennungsmotor-Antriebswelle (20) abschnittweise einander durchgreifend angeordnet sind.

7. Antriebsstrang nach einem der vorangehenden Ansprüche,
**dadurch gekennzeichnet,**
**dass** der Rotor (141) der elektrischen Maschine (14) und die Verbrennungsmotor-Antriebswelle (20; 20) mittels einer schaltbaren Hauptwellenkupplung (50; 50') miteinander verbindbar sind.

8. Hybridfahrzeugs mit einem Antriebsstrang,
**dadurch gekennzeichnet,**
**dass** der Antriebsstrang (10, 10') als ein Antriebsstrang nach einem der vorangehenden Ansprüche ausgebildet ist.

9. Verwendung eines Hybridfahrzeugs nach Anspruch 8, soweit rückbezogen auf Anspruch 7, welches eine mit der Leistungselektronik (60) und dem elektrischen Energiespeicher (62) verbundene elektrische Anschlussschnittstelle (64) aufweist, als elektrisches Aggregat, wobei der Rotor (141) der elektrischen Maschine (14) und die Verbrennungsmotor-Antriebswelle (20, 20') mittels der Hauptwellenkupplung (50, 50') drehfest miteinander verbunden werden, ein elektrischer Verbraucher an die Anschlussschnittstelle (64) angeschlossen wird und die elektrische Maschine (14) im Generatorbetrieb betrieben wird, während die Verbrennungskraftmaschine (22) über die Leistungselektronik (60) zu einem Betrieb bei Drehzahlen gemäß der aktuellen Leistungsaufnahme des elektrischen Verbrauchers angesteuert wird.

## Claims

1. Hybrid drivetrain for a motor vehicle, having a combustion engine (12; 12') and having an electric machine (14) which is connected to power electronics (60) and to an electrical energy store (62) and which has a stator (142) and a rotor (141), which combustion engine and electric machine are connectable in torque-transmitting fashion to an output shaft (26), wherein
- the combustion engine (12, 12') is coupled to a combustion engine driveshaft (20; 20') which bears one or more driveshaft pinions (201, 202),
- the rotor (141) of the electric machine (14) is coupled to an electric machine driveshaft (40), which bears one or more driveshaft pinions (401) and is arranged coaxially with respect to the combustion engine driveshaft (20; 20'), via a planetary gear set (38) comprising a sun gear (381), which acts as input element, a web (382), which acts as output element, and an internal gear (383),
- the at least one driveshaft pinion (201, 202) of the combustion engine driveshaft (20; 20') forms a switchably torque-transmitting pinion pairing with a corresponding collective shaft pinion (221, 222) of a first collective shaft (22) which is coupled in torque-transmitting fashion to the output shaft (26), and
- the at least one driveshaft pinion (401) of the electric machine driveshaft (40) forms a torque-transmitting pinion pairing with a corresponding collective shaft pinion (224; 421) of a collective shaft (22; 42) which is coupled in torque-transmitting fashion to the output shaft (26),
**characterized in that**
the rotor (141) of the electric machine (14) is selectively connectable to either the sun gear (381) or the web (382) of the planetary gear set (38), the internal gear (383) of which is arranged fixedly with respect to a housing, by means of a switchable clutch (44).

2. Drivetrain according to Claim 1,
**characterized**
**in that** that collective shaft (22) whose collective shaft pinion (221, 222) forms a torque-transmitting pinion pairing with the driveshaft pinion (401) of the electric machine driveshaft (40) is the first collective shaft (22).

3. Drivetrain according to Claim 1, **characterized**
**in that** that collective shaft (42) whose collective shaft pinion (421) forms a torque-transmitting pinion pairing with the driveshaft pinion (401) of the electric machine driveshaft (40) is a second collective shaft (42), whose collective shaft pinions (421) do not form a pinion pairing with driveshaft pinions (201, 202) of the combustion engine driveshaft (20').

4. Drivetrain according to one of the preceding claims,
**characterized**
**in that** at least one driveshaft pinion (201, 202) of the combustion engine driveshaft (20, 20') forms a switchably torque-transmitting pinion pairing with a corresponding collective shaft pinion of a third collective shaft (32), which is coupled in torque-transmitting fashion to the output shaft (26).

5. Drivetrain according to one of the preceding claims,
**characterized**
**in that** the output shaft (26) is arranged parallel to and radially spaced apart from both the driveshafts (20; 20', 40) of combustion engine (12) and electric machine (14) and each collective shaft (22, 32, 42).

6. Drivetrain according to one of the preceding claims,
**characterized**
**in that** the electric machine driveshaft (40) and the combustion engine driveshaft (20) are arranged so as to extend one through the other in sections.

7. Drivetrain according to one of the preceding claims,
**characterized**
**in that** the rotor (141) of the electric machine (14) and the combustion engine driveshaft (20; 20) are connectable to one another by means of a switchable main shaft clutch (50; 50').

8. Hybrid vehicle having a drivetrain,
**characterized**
**in that** the drivetrain (10, 10') is designed as a drivetrain according to one of the preceding claims.

9. Use of a hybrid vehicle according to Claim 8, where referred back to Claim 7, which hybrid vehicle has an electrical connection interface (64) which is connected to the power electronics (60) and to the electrical energy store (62), as electrical unit, wherein the rotor (141) of the electric machine (14) and the combustion engine driveshaft (20, 20') are connected rotationally conjointly to one another by means of the main shaft clutch (50, 50'), an electrical consumer is connected to the connection interface (64), and the electric machine (14) is operated in the generator mode, while the combustion engine (22) is, by way of the power electronics (60), controlled so as to operate at engine speeds in accordance with the present power consumption of the electrical consumer.

## Revendications

1. Chaîne cinématique hybride destinée à un véhicule automobile, comprenant un moteur à combustion interne (12 ; 12') et une machine électrique (14), reliée à une électronique de puissance (60) et à un accumulateur d'énergie électrique (62) et comportant un stator (142) et un rotor (141), qui peuvent être reliés en transmission de couple à un arbre de sortie (26), dans lequel
- le moteur à combustion interne (12 ; 12') est accouplé avec un arbre d'entraînement de moteur à combustion (20 ; 20') portant un ou plusieurs pignons d'arbre d'entraînement (201, 202)
- le rotor (141) de la machine électrique (14) est accouplé par le biais d'un train planétaire (38), comprenant une roue solaire (381) faisant office d'élément d'entrée, un porte-satellites (382) faisant office d'élément de sortie, et une couronne (383), avec un arbre d'entraînement de machine électrique (40) portant un ou plusieurs pignons d'arbre d'entraînement (401), disposé coaxialement par rapport à l'arbre d'entraînement du moteur à combustion (20 ; 20'),
- l'au moins un pignon d'arbre d'entraînement (201, 202) de l'arbre d'entraînement du moteur à combustion (20 ; 20') forme avec un pignon d'arbre commun (221, 222) correspondant d'un premier arbre commun (22), accouplé en transmission de couple avec l'arbre de sortie (26), un appariement de pignons commutable à transmission de couple et
- l'au moins un pignon d'arbre d'entraînement (401) de l'arbre d'entraînement de machine électrique (40) forme avec un pignon d'arbre commun (224 ; 421) correspondant d'un arbre commun (22 ; 42) accouplé avec l'arbre de sortie (26) un appariement de pignons à transmission de couple,
**caractérisée en ce que** le rotor (141) de la machine électrique (14) peut être relié au moyen d'un accouplement commutable (44) au choix, soit à la roue solaire (381), soit au porte-satellites (382) du train planétaire (38), dont la couronne (383) est disposée de manière solidaire du boîtier.

2. Chaîne cinématique selon la revendication 1,
**caractérisée en ce que** l'arbre commun (22) avec les pignons d'arbre commun (221, 222) duquel le pignon d'arbre d'entraînement (401) de l'arbre d'entraînement de machine électrique (40) forme un appariement de pignons à transmission de couple est le premier arbre commun (22).

3. Chaîne cinématique selon la revendication 1,
**caractérisée en ce que** l'arbre commun (42) avec les pignons d'arbre commun (421) duquel le pignon d'arbre d'entraînement (401) de l'arbre d'entraînement de machine électrique (40) forme un appariement de pignons à transmission de couple est un deuxième arbre commun (42) dont les pignons d'arbre commun (421) ne forment pas d'appariement de pignons avec les pignons d'arbre d'entraînement (201, 202) de l'arbre d'entraînement du moteur à combustion (20').

4. Chaîne cinématique selon l'une quelconque des revendications précédentes,
**caractérisée en ce qu'**au moins un pignon d'arbre d'entraînement (201, 202) de l'arbre d'entraînement du moteur à combustion (20, 20') forme avec des pignons d'arbre commun correspondants d'un troisième arbre commun (32) accouplé en transmission de couple avec l'arbre de sortie (26) un appariement de pignons commutable à transmission de couple.

5. Chaîne cinématique selon l'une quelconque des revendications précédentes,
**caractérisée en ce que** l'arbre de sortie (26) est disposé parallèlement et de manière radialement espacée par rapport aux arbres d'entraînement (20 ; 20', 40) du moteur à combustion (12) et de la machine électrique (14) et à chaque arbre commun (22, 32, 42).

6. Chaîne cinématique selon l'une quelconque des revendications précédentes,
**caractérisée en ce que** l'arbre d'entraînement de la machine électrique (40) et l'arbre d'entraînement du moteur à combustion (20) sont disposés de manière à s'engager l'un dans l'autre par sections.

7. Chaîne cinématique selon l'une quelconque des revendications précédentes,
**caractérisée en ce que** le rotor (141) de la machine électrique (14) et l'arbre d'entraînement du moteur à combustion (20 ; 20) peuvent être reliés l'un à l'autre au moyen d'un embrayage d'arbre principal commutable (50 ; 50').

8. Véhicule hybride comportant une chaîne cinématique,
**caractérisé en ce que** la chaîne cinématique (10, 10') est réalisée sous la forme d'une chaîne cinématique selon l'une quelconque des revendications précédentes.

9. Utilisation d'un véhicule hybride selon la revendication 8 lorsqu'elle dépend de la revendication 7, comportant une interface de raccordement électrique (64) reliée à l'électronique de puissance (60) et à l'accumulateur d'énergie électrique (62), en tant que groupe électrique, dans lequel le rotor (141) de la machine électrique (14) et l'arbre d'entraînement du moteur à combustion (20, 20') sont reliés l'un à l'autre de manière fixe en rotation au moyen de l'embrayage d'arbre principal (50, 50'), un consommateur électrique est raccordé à l'interface de raccordement (64) et la machine électrique (14) est mise en fonctionnement en mode générateur pendant que le moteur à combustion (22) est commandé par l'intermédiaire de l'électronique de puissance (60) dans un mode de fonctionnement correspondant à des vitesses de rotation conformes à la puissance absorbée actuelle du consommateur électrique.
